Europäisches Patentamt

**European Patent Office**

**Office européen des brevets**

(19)

(11) Numéro de publication : **0 078 184**
**B1**

(12)

# FASCICULE DE BREVET EUROPÉEN

(45) Date de publication du fascicule du brevet :
22.01.86

(51) Int. Cl.⁴ : **C 05 G   3/00**

(21) Numéro de dépôt : **82401708.1**

(22) Date de dépôt : **21.09.82**

(54) **Dispositif de conditionnement d'engrais et/ou d'autres produits utilisables notamment en agriculture, permettant une désorption programmée de l'engrais.**

(30) Priorité : 24.09.81 FR 8118012

(43) Date de publication de la demande :
04.05.83 Bulletin 83/18

(45) Mention de la délivrance du brevet :
22.01.86 Bulletin 86/04

(84) Etats contractants désignés :
**BE CH DE GB IT LI LU SE**

(56) Documents cités :
**DE-C-    27 756**
**DE-C-   832 358**
**FR-A- 1 255 947**
**FR-A- 1 279 110**
**FR-A- 1 395 993**
**FR-A- 1 419 969**
**FR-A- 2 121 831**
**GB-A- 1 535 854**
**US-A- 1 971 390**
**US-A- 2 145 934**
**US-A- 2 759 300**
**US-A- 2 931 140**
**US-A- 3 579 476**
**Chem. Abstracts 84, 74888 b**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Berthet, Jeanne**
**1, Allée du Roussillon**
**F-78140 Velizy Villacoublay (FR)**
Inventeur : **Blin, Marie-Françoise**
**86, Avenue de Paris**
**F-78000 Versailles (FR)**
Inventeur : **Gaussens, Gilbert**
**11, rue Jean Brunet**
**F-92190 Meudon (FR)**
Inventeur : **Noaillac, Jean Roch**
**3, Clos Pérault**
**F-91200 Athis-Mons (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

### Description

La présente invention a pour objet un dispositif de conditionnement d'engrais hydrosolubles et/ou d'autres produits hydrosolubles utilisables en agriculture, en pisciculture pour le traitement des maladies, la désinfection, l'apport de substances nutritives, etc... et pour le traitement des pièces d'eau (fongicides, désinfectants), qui permet d'obtenir une désorption programmée de l'engrais et/ou des produits dans le milieu à fertiliser ou à traiter.

Depuis quelques années, les recherches ont porté sur la réalisation de formes d'engrais à action différée, qui soient capables d'être libérés progressivement dans le milieu à fertiliser. A la suite de ces recherches, on a réalisé des engrais granulaires concentrés en formant autour de granules d'engrais, de dimensions très faibles, un ou plusieurs revêtements à base de matières hydrophobes telles que des résines alkydes de soja et des résines phénolformaldéhyde. Les brevets français 1.279.110 et 1.419.969 illustrent la réalisation de tels produits par pulvérisation d'enduits d'apprêt et d'enduits complémentaires sur de la poudre ou des granules d'engrais. Selon cette technique, on peut agir sur la vitesse de libération de l'engrais en choisissant de façon appropriée le nombre et la nature des différents enduits déposés successivement. Cependant, il est difficile de régler à une valeur appropriée et sur une durée prolongée le taux d'engrais libéré. Par ailleurs, la réalisation de ces produits exige des installations complexes et reste difficile à mettre en œuvre.

La présente invention a précisément pour objet un dispositif de conditionnement d'engrais hydrosolubles ou d'autres produits hydrosolubles (herbicides, fongicides, insecticides, etc...) utilisables en agriculture, en pisciculture pour le traitement des maladies, la désinfection, l'apport de substances nutritives, etc... et pour le traitement des pièces d'eau (fongicides, désinfectants), qui pallie les inconvénients des produits connus actuellement.

A cet effet, le dispositif de conditionnement d'engrais hydrosolubles et/ou de produits hydrosolubles utilisables en agriculture se caractérise en ce qu'il comprend un récipient fermé dont au moins l'une des parois est constituée par une membrane de polymère hydrophobe greffé par des monomères hydrophiles ledit récipient contenant lesdits engrais et/ou lesdits produits.

Grâce à la présence dans ce conditionnement d'une membrane en polymère hydrophobe comportant des inclusions hydrophiles formées par greffage de monomères hydrophiles dans le polymère hydrophobe, de l'eau peut pénétrer par capillarité dans le conditionnement en suivant le trajet des inclusions hydrophiles qui sont capables d'absorber l'eau ; lorsque de l'eau entre en contact avec l'engrais ou les autres produits présents dans le conditionnement, elle dissout ces derniers et la solution obtenue est ensuite désorbée par la membrane dans le milieu à traiter où elle libère une certaine quantité d'engrais ou d'autres produits.

Ainsi, on utilise les propriétés de perméabilité à l'eau de la membrane en polymère hydrophobe-hydrophile pour assurer la libération progressive et contrôlée de l'engrais et/ou des autres produits présents dans le conditionnement.

Par ailleurs, le dispositif de conditionnement de l'invention présente l'avantage de pouvoir être réalisé facilement sous des formes diverses telles que des sachets, des barquettes, des tubes, qui peuvent contenir une quantité relativement importante d'engrais et/ou d'autres produits pour l'agriculture.

A titre de polymères hydrophobes susceptibles d'être utilisés, on peut citer les polyoléfines et les copolymères d'oléfines, par exemple, le polyéthylène, le polypropylène et leurs copolymères tels que les copolymères d'éthylène et d'acétate de vinyle.

A titre de monomères hydrophiles susceptibles d'être utilisés, on peut citer l'acide acrylique et la vinylpyrrolidone.

Dans le dispositif de conditionnement de l'invention, la cinétique de désorption de l'engrais et/ou des autres produits dépend en particulier de la nature chimique des constituants hydrophobes et hydrophiles de la membrane, de la quantité de monomères hydrophiles greffés et de l'épaisseur de la membrane.

Généralement pour obtenir des vitesses de désorption satisfaisantes, le taux de monomères hydrophiles greffés est de 25 à 50 % en poids par rapport au poids de polymère hydrophobe et l'épaisseur du film est de 0,1 à 0,2 mm. Toutefois, on peut utiliser des épaisseurs inférieures à condition de satisfaire les impératifs de solidité de la membrane ; de même, on peut utiliser des membranes d'épaisseur plus importante s'il s'avère que la cinétique de désorption reste satisfaisante pour l'application envisagée.

Selon l'invention, le dispositif de conditionnement peut être sous la forme de barquettes, de sachets ou de tubes.

Dans le cas de barquettes, on peut réaliser le fond de la barquette et ses côtés en polyéthylène de haute densité ayant par exemple une épaisseur de 0,8 mm et réaliser uniquement la face supérieure de la barquette en polymère hydrophobe greffé par des monomères hydrophiles. De telles barquettes peuvent avoir les dimensions suivantes : 35 mm de longueur, 10 mm de largeur, 15 mm de profondeur avec un rebord de 2,5 mm et contenir ainsi 2,5 à 4,5 g d'engrais.

Dans le cas de sachets, on réalise habituellement ceux-ci complètement en polymère hydrophobe greffé par des monomères hydrophiles, ces sachets peuvent être carrés, rectangulaires ou allongés en fonction de l'utilisation prévue et contenir de 2,5 à 10 g d'engrais.

Ces sachets, tubes ou barquettes peuvent contenir différents types d'engrais, en particulier des mélanges préalablement dosés pour fournir les substances nutritives nécessaires à la culture. Par ailleurs, ils peuvent contenir d'autres produits utilisables en agriculture tels que des herbicides, des pesticides, etc. Dans certains cas, notamment lorsque l'engrais conditionné est à base de phosphate ou de nitrate, on peut introduire également dans le dispositif de conditionnement de l'ammoniaque ou une solution aqueuse de sel d'ammonium, ce qui permet de faciliter la diffusion de l'engrais à travers la membrane.

Les dispositifs de conditionnement de l'invention se révèlent particulièrement intéressants pour la fertilisation des cultures réalisées en pots, notamment lorsqu'il sont sous la forme de sachets ou de barquettes ; et ils conviennent également à la culture des arbres en conteneurs notamment lorsqu'ils sont sous la forme de tubes qui sont adaptés à la fertilisation directe par introduction dans le tronc de l'arbre.

Les membranes en polymère hydrophobe greffé par des monomères hydrophiles, utilisées dans le dispositif de conditionnement décrit ci-dessus sont avantageusement préparées par un procédé consistant à préparer une poudre de polymère hydrophobe greffé par des monomères hydrophiles, et à mettre sous la forme d'une membrane la poudre de polymère hydrophobe ainsi greffé par différents procédés de mise en œuvre à chaud.

En effet, pour obtenir une membrane hydrophobe dans laquelle des inclusions hydrophiles soient réparties de façon homogène dans toute l'épaisseur de la membrane afin de permettre un bon échange entre l'intérieur et l'extérieur du dispositif de conditionnement, il est préférable de greffer le monomère hydrophile sur une poudre de polymère hydrophobe ; généralement, on utilise une poudre de polymère hydrophobe ayant une granulométrie moyenne de 5 à 1 000 μm.

Bien que le greffage puisse être réalisé par tous procédés connus, par exemple par voie chimique, on le réalise de préférence par irradiation au moyen de rayonnements ionisants tels que les rayonnements X, gamma, ultraviolets ou des faisceaux d'électrons.

Selon un mode de mise en œuvre du procédé, on prépare la poudre de polymère hydrophobe greffé en soumettant à une irradiation au moyen de rayonnements ionisants une poudre de polymère hydrophobe et en immergeant ensuite la poudre ainsi irradiée dans une solution de monomères hydrophiles contenant un inhibiteur de polymérisation.

Dans ce cas, la poudre est oxydée par irradiation à l'air généralement sous faisceaux d'électrons accélérés, et lorsqu'on la met ensuite en contact avec une solution de monomères, on obtient un greffage des monomères sur la poudre. Pour régler à une valeur appropriée le taux de greffage de monomères hydrophiles, on agit sur la dose d'irradiation appliquée, et sur la température et la durée pendant laquelle on met en contact la poudre avec la solution de monomères hydrophiles. Lorsque l'irradiation est réalisée au moyen de faisceaux d'électrons accélérés, on utilise généralement un faisceau d'électrons ayant une énergie de 2 à 3 MeV et une intensité de 200 à 600 microampères, et la dose appliquée est de 0,6 à 4 Mrad. Après irradiation, on immerge la poudre de polymère hydrophobe peroxydé dans une solution de monomères portée à une température de 40 à 90 °C pendant une durée de 2 à 17 h, en opérant sous atmosphère d'azote. La solution de monomères renferme un inhibiteur de polymérisation pour éviter une homopolymérisation du monomère en solution.

Selon un autre mode de mise en œuvre du procédé, on prépare la poudre de polymère hydrophobe greffé par la méthode directe, c'est-à-dire en soumettant à une irradiation au moyen de rayonnements ionisants une poudre de polymère hydrophobe immergée dans une solution de monomères hydrophiles contenant un inhibiteur de polymérisation.

Dans ce cas, on opère généralement sous azote en soumettant à une agitation la poudre contenue dans la solution et on réalise de préférence l'irradiation au moyen de rayonnements gamma à un débit de dose de 0,04 à 0,08 Mrad/h et une dose de 0,8 à 1,5 Mrad. La composition de la solution est choisie en fonction de la quantité de poudre de polymère hydrophobe et du taux de greffage que l'on veut obtenir. Généralement, on utilise une solution aqueuse comprenant une quantité d'eau permutée qui correspond à 2,6 fois le poids de poudre de polymère hydrophobe, une quantité de monomères représentant 1,05 à 1,1 fois le poids théorique de monomères que l'on veut greffer et une quantité d'inhibiteur de polymérisation représentant 5 à 7 % du poids de monomères en solution.

Pour régler à la valeur voulue le taux de greffage de monomères hydrophiles, on agit sur la température et la concentration en monomère de la solution sur le débit de dose d'irradiation et sur la durée d'irradiation. De même, on opère en présence d'un inhibiteur de polymérisation pour éviter l'homopolymérisation du monomère en solution.

Après greffage, la poudre obtenue est filtrée ou essorée, lavée à l'eau, généralement à une température de 90 °C, puis séchée à l'étuve sous vide jusqu'à l'obtention d'un poids constant. On détermine alors le taux de greffage (en %) qui correspond à

$$\frac{P_f - P_i}{P_i} \times 100$$

avec $P_f$ représentant le poids de la poudre greffée et $P_i$ le poids de la poudre avant greffage.

La poudre greffée ainsi obtenue est ensuite mise sous la forme de membrane par formage à chaud, par exemple, par calandrage après homogénéisation dans un malaxeur, par compression à chaud, ou

3

encore par extrusion en opérant à une température qui est choisie en fonction de la poudre traitée.

Pour obtenir une membrane plane de 0,1 à 0,2 mm d'épaisseur, on peut opérer par compression à chaud à une température de 150 à 200 °C sous une pression de 5 à 6 bars (0,5 à 0,6 MPa). Lorsque l'on veut obtenir des tubes ayant par exemple, 16 mm de diamètre extérieur et 0,1 à 0,2 mm d'épaisseur, on peut opérer par extrusion à une température de 130 à 200 °C.

Dans certains cas, après l'opération de formage à chaud, on soumet la membrane obtenue à un traitement de réticulation sous iradiation au moyen de rayonnements ionisants.

Ce traitement permet d'agir sur les propriétés d'absorption et de désorption de la membrane. En effet, il conduit à un resserrement du réseau macromoléculaire de la membrane, ce qui a pour effet de retarder l'absorption d'eau et de diminuer également la vitesse de désorption de la solution d'engrais.

Le traitement de réticulation est généralement réalisé par irradiation de la membrane au moyen de rayonnements ionisants tels que ceux qui sont utilisés pour le greffage, en adaptant la dose de rayonnements auxquels est soumise la membrane en fonction du taux de réticulation que l'on veut obtenir.

Dans certains cas, on réalise cette irradiation après avoir immergé la membrane dans une solution de monomères polyinsaturés tels que les diacrylates et les diméthacrylates de polyéthylèneglycol, de diéthylèneglycol, de triéthylèneglycol, ou de tétraéthylèneglycol, le divinylbenzène, le diacrylate de 1,3 butylèneglycol, le diméthacrylate de 1,3 butylèneglycol, le triacrylate et le triméthacrylate de tyriméthylol-propane, le diacrylate et le diméthacrylate d'éthylène, le diacrylate et le diméthacrylate de 1,6 hexaméthylène.

Après ces différentes opérations, on utilise les membranes hydrophobes-hydrophiles ainsi obtenues pour fabriquer des dispositifs de conditionnement selon l'invention.

Dans ce but, on assemble les membranes hydrophobes-hydrophiles entre elles ou avec d'autres éléments pour former le récipient qui recevra la quantité d'engrais voulue, sans toutefois l'obturer complètement. Ensuite, on remplit le récipient d'engrais et/ou d'autres produits utilisables en agriculture, puis on ferme le récipient en utilisant soit une membrane hydrophobe-hydrophile, soit un autre élément.

Lorsqu'on veut réaliser le conditionnement sous la forme de barquettes ayant par exemple 35 mm de longueur, 10 mm de largeur et 15 mm de profondeur avec un rebord de 2,5 mm, on opère par thermoformage à partir de plaques de polyéthylène de haute densité ayant une épaisseur de 0,8 mm. Ensuite, on introduit la quantité voulue d'engrais dans la barquette et on obture celle-ci en réalisant la partie supérieure avec une membrane hydrophobe-hydrophile que l'on fixe par thermosoudage sur le rebord de la barquette.

Lorsqu'on veut réaliser des conditionnements ayant la forme de sachets contenant de 2,5 à 10 g d'engrais, on assemble entre elles des membranes hydrophobes-hydrophiles par thermosoudage en laissant une partie libre pour remplir le sachet et on obture celui-ci par thermosoudage après l'avoir rempli de la quantité voulue d'engrais.

Lorsque le conditionnement a la forme d'un tube ayant par exemple un diamètre de 1,6 cm on obture les extrémités du tube par thermosoudage après avoir rempli celui-ci de la quantité voulue d'engrais.

D'autres caractéristiques et avantages de l'invention apparaîtront mieux à la lecture des exemples suivants donnés bien entendu à titre illustratif et non limitatif, en référence au dessin annexé sur lequel :

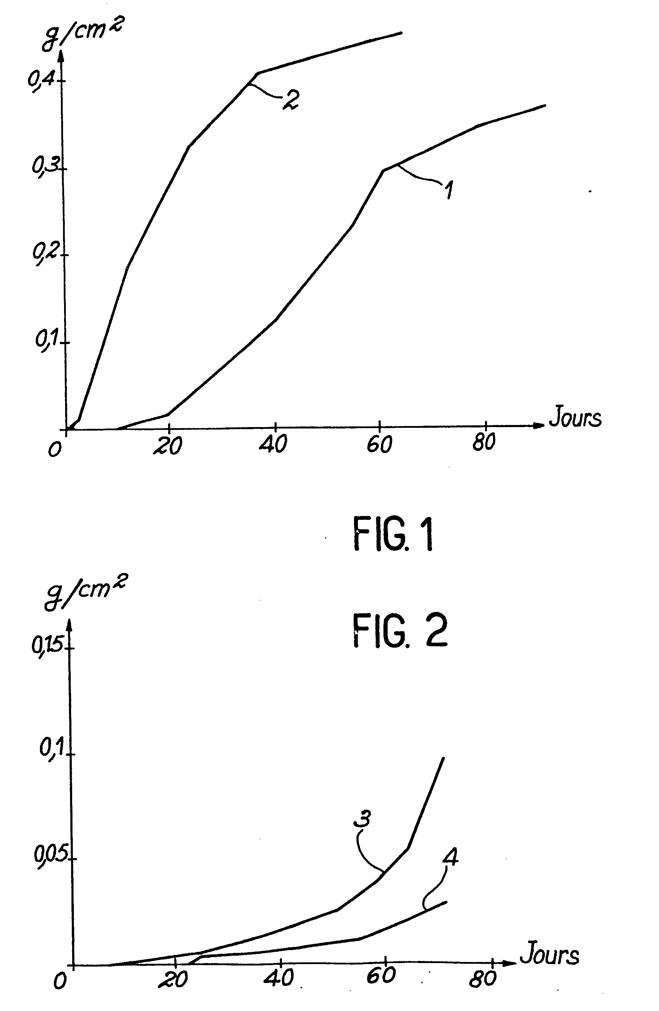

les figures 1, 2, 3, 4 et 5 sont des diagrammes représentant les quantités de substance libérée (en g/cm² de membrane) par différents dispositifs de conditionnement de l'invention en fonction du temps (en jours).

## Exemple 1

Cet exemple concerne la fabrication d'un dispositif de conditionnement en forme de sachet contenant de l'urée, réalisé en polyéthylène greffé par de l'acide acrylique. On soumet à une irradiation par un faisceau d'électrons accélérés d'une énergie de 2 MeV, avec une intensité de faisceau de 600 μA, à une dose d'irradiation de 3,3 Mrad, 250 g d'une poudre de polyéthylène vendu sous la marque LOTRENE UA 4000 d'une granulométrie moyenne de 5 à 20 μm.

Après irradiation, on immerge les 250 g de poudre de polyéthylène peroxydé dans 1,2 l d'une solution aqueuse à 22 g/l de sel de Mohr (inhibiteur de polymérisation) à laquelle on a ajouté 125 ml d'acide acrylique. On porte le mélange à une température de 74 °C, sous atmosphère d'azote, pendant 3 h, puis on sépare la poudre de la solution, on la lave et on la sèche. On la pèse ensuite afin de déterminer le taux de greffage. Celui-ci est de 27 %.

On met ensuite la poudre greffée sous la forme d'une membrane de 0,2 mm d'épaisseur au moyen d'une presse à une température de 150 °C et sous une pression de 5 bars (0,5 MPa). A partir de la membrane ainsi obtenue, on réalise des sachets de 3,5 cm de côté que l'on remplit de 10 g d'urée et que l'on scelle ensuite par thermosoudage. Les sacs ainsi obtenus ont une surface de membrane de 20 cm².

On vérifie les propriétés des conditionnements ainsi obtenus en les immergeant dans 250 ml d'eau déminéralisée à une température de 25 °C et en déterminant périodiquement la quantité d'urée libérée dans l'eau. Les résultats obtenus sont illustrés par la courbe 1 de la figure 1 qui représente la quantité d'urée libérée (en g par cm² de membrane) en fonction du temps (en jours).

4

Exemple 2

On prépare comme dans l'exemple 1 deux sachets en polyéthylène greffé à 27 % d'acide acrylique, dont la surface de membrane est de 20 cm$^2$ et l'épaisseur de 0,1 mm, puis on introduit respectivement 10 g de phosphate de potassium et 10 g de nitrate de calcium dans les deux sachets obtenus.

On vérifie ensuite leurs propriétés en réalisant la désorption par immersion de chaque sachet dans 250 ml d'eau déminéralisée à une température de 40 °C. Les résultats obtenus sont illustrés par les courbes 3 et 4 de la figure 2 qui représentent respectivement la quantité de phosphate de potassium (courbe 3) et la quantité de nitrate de calcium (courbe 4) libérée par cm$^2$ de membrane en fonction du temps (en jours).

Exemple 3

On soumet à une irradiation au moyen d'un faisceau d'électrons accélérés d'une énergie de 3 MeV, ayant une intensité de faisceau de 400 µA, 250 g de poudre de polyéthylène, identique à celle de l'exemple 1, en utilisant une dose d'irradiation de 1,9 Mrad. Après irradiation, on immerge la poudre dans une solution d'acide acrylique identique à celle de l'exemple 1, que l'on porte à une température de 93 °C, pendant 16 h sous atmosphère d'azote. On obtient ainsi une poudre de polyéthylène greffé à 50 % d'acide acrylique.

On prépare à partir de cette poudre une membrane de 0,2 mm d'épaisseur en utilisant une presse à une température de 160 °C et sous une pression de 5,7 bars et on réalise à partir de cette membrane des sachets identiques à ceux de l'exemple 1 contenant 10 g d'urée, la surface de la membrane étant de 20 cm$^2$.

On vérifie les propriétés du conditionnement ainsi obtenu en réalisant la désorption de l'urée dans les mêmes conditions que celles de l'exemple 1. Les résultats obtenus sont illustrés par la courbe 2 de la figure 1 qui représente la quantité d'urée libérée (en g/cm$^2$ de membrane) en fonction du temps. En comparant les courbes 1 et 2 de la figure 1, on constate que l'urée est libérée plus rapidement lorsque le taux d'acide acrylique de la membrane augmente.

Exemple 4

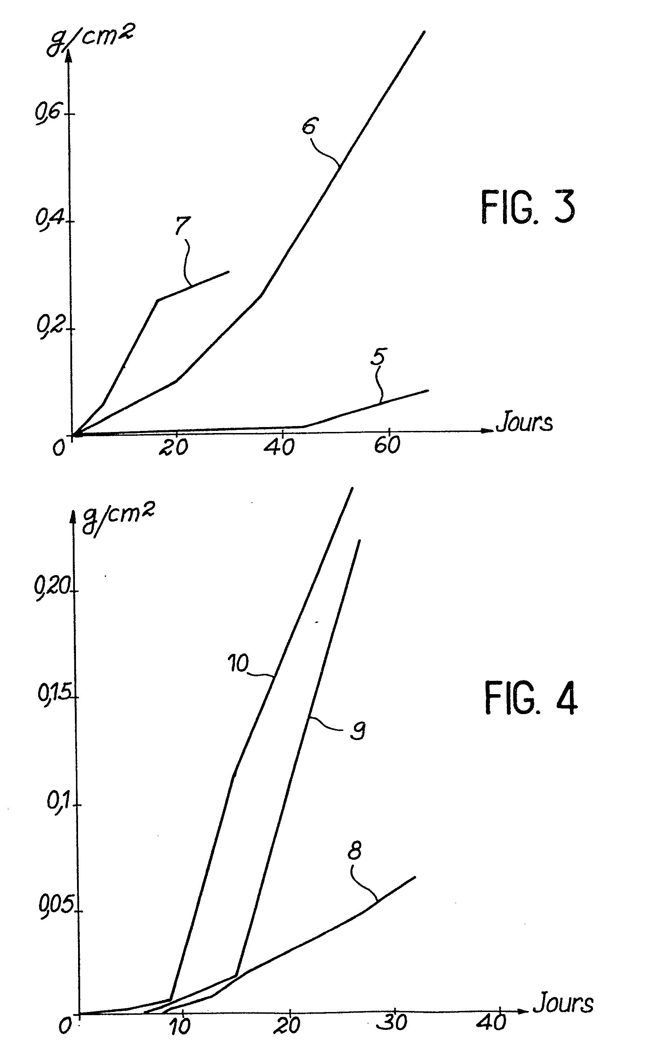

On réalise des barquettes contenant 4,5 g de phosphate monopotassique en utilisant des membranes en polyéthylène greffé à 50 % d'acide acrylique identiques à celles de l'exemple 3, pour constituer uniquement la partie supérieure de la barquette, ce qui correspond à une surface de membrane de 3,9 cm$^2$. Après scellement, on vérifie les propriétés des conditionnements en réalisant la désorption à 25 et à 40 °C. Les résultats obtenus sont illustrés respectivement par les courbes 5 (25 °C) et 6 (40 °C) de la figure 3 qui représentent les quantités de phosphate de potassium libérées (en g/cm$^2$ de membrane) en fonction du temps (en jours).

Exemple 5

On immerge 250 g de poudre de copolymère d'éthylène et d'acétate de vinyle à 18 % d'acétate de vinyle dans une solution d'acide acrylique comprenant :
— acide acrylique : 73 ml
— eau permutée : 650 ml
— sel de Mohr (inhibiteur de polymérisation) : 4,3 g.

On agite le mélange sous azote et on le soumet à une irradiation gamma au moyen d'une source de cobalt 60, à un débit de dose de 47 000 rad/h avec une dose d'irradiation de 0,8 Mrad.

On obtient ainsi une poudre de copolymère d'éthylène et d'acétate de vinyle greffé par l'acide acrylique, dont le taux de greffage est de 26 %. On met cette poudre sous la forme d'une membrane de 0,2 mm d'épaisseur par calandrage et on forme à partir de la membrane obtenue des sachets contenant 2,5 g d'urée et ayant une surface de membrane de 9 cm$^2$.

On vérifie les propriétés des sachets ainsi obtenus en réalisant la désorption à 40 °C. Les résultats obtenus sont représentés par la courbe 9 de la figure 4 qui illustre la quantité d'urée libérée par cm$^2$ de membrane en fonction du temps (en jours).

Par ailleurs, en contrôlant sur une dizaine de sachets, la désorption de l'urée par mesure des variations du pH de l'eau dans laquelle est libérée l'urée, on a vérifié que les résultats étaient similaires, ce qui montre que les conditionnements de l'invention présentent des caractéristiques reproductibles.

Exemple 6

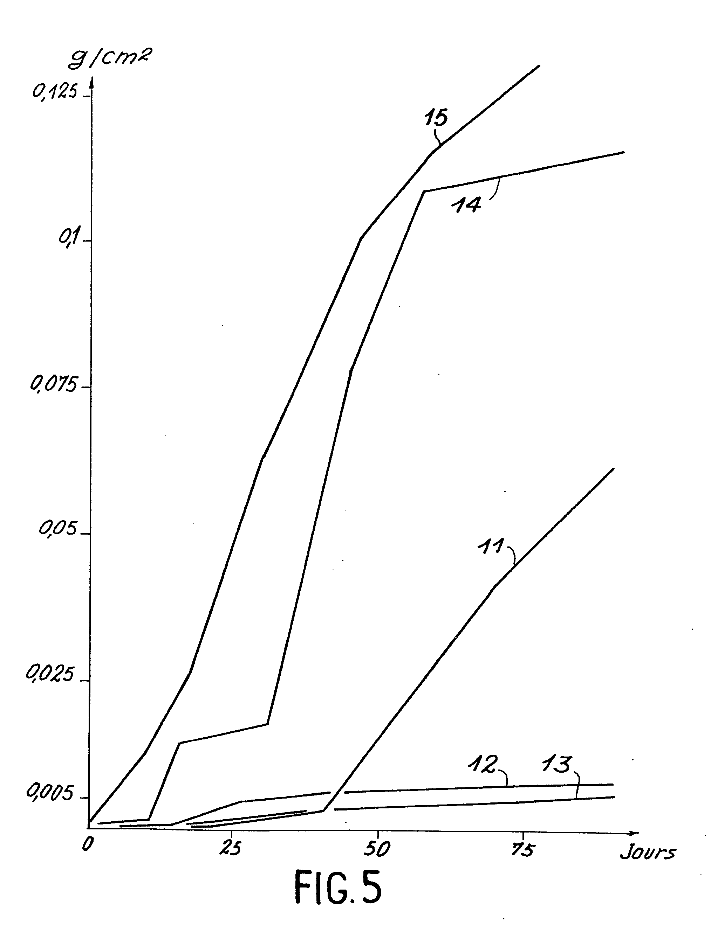

A partir d'un copolymère greffé identique à celui de l'exemple 5, on forme par calandrage un film de 0,1 mm d'épaisseur puis on met le film sous la forme de sachets contenant 2,5 g d'urée avec une surface de membrane de 9 cm$^2$. On vérifie les propriétés du conditionnement ainsi obtenu en réalisant la

5

désorption à 40 °C. Les résultats obtenus sont illustrés par la courbe 10 de la figure 5 qui représente la quantité d'urée libérée par cm² de membrane en fonction du temps.

## Exemple 7

On réalise un sachet d'engrais identique à celui de l'exemple 6 et on vérifie ses propriétés en réalisant la désorption à 25 °C au lieu de 40 °C. Les résultats obtenus sont illustrés par la courbe 8 de la figure 4 qui représente le taux d'urée libérée par cm² de membrane en fonction du temps.

## Exemple 8

On immerge 250 g de poudre de copolymère d'éthylène et d'acétate de vinyle à 33 % d'acétate de vinyle dans une solution d'acide acrylique comprenant :
— acide acrylique : 118 ml
— eau permutée : 1 045 ml
— sel de Mohr : 7 g
On agite le mélange sous azote et on le soumet à une irradiation gamma du cobalt 60 à un débit de dose de 60 000 rad/h avec une dose d'irradiation de 1,02 Mrad.
On obtient ainsi un taux de greffage de 47 %.
On met cette poudre de copolymère greffé sous la forme d'une membrane de 0,2 mm d'épaisseur par calandrage, puis on fabrique des sachets contenant 4,5 g de phosphate monopotassique à partir de cette membrane avec une surface de membrane de 15 cm². On vérifie les propriétés du conditionnement ainsi obtenu en réalisant la désorption à 25 °C. Les résultats sont illustrés par la courbe 7 de la figure 3 qui représente la quantité de phosphate monopotassique libéré par cm² de membrane en fonction du temps en jours.

## Exemple 9

On soumet à une irradiation au moyen d'un faisceau d'électrons d'une énergie de 3 MeV, avec une intensité de faisceau de 400 µA et une dose d'irradiation de 1,9 Mrad, de la poudre de polyéthylène identique à celle de l'exemple 1. Après irradiation, on immerge la poudre dans une solution d'acide acrylique identique à celle de l'exemple 1, mais chauffée à une température de 80 °C et on la maintient dans la solution pendant 1 h.
On obtient ainsi une poudre de polyéthylène greffé à 39,5 % d'acide acrylique.
A partir de cette poudre, on prépare une membrane de 0,2 mm d'épaisseur par formage sous presse, à une température de 155 °C et une pression de 5 bars. Puis on réalise à partir de cette membrane des barquettes contenant 2,5 g d'urée et ayant une surface de membrane de 3,9 cm² et on les utilise dans des essais de culture de pousses d'eucalyptus. Pour ces essais, on utilise une première série $E_1$ de 24 pots de pousses d'eucalyptus dans chacun desquels on introduit une barquette d'engrais, une deuxième série $E_2$ de 24 pots d'eucalyptus dans lesquels on a introduit deux barquettes d'engrais et une troisième série $E_3$ de 24 pots de pousses d'eucalyptus contenant chacun 3 barquettes d'engrais. On utilise comme témoin une quatrième série $E_0$ de 24 pots de pousses d'eucalyptus dans lesquels on n'a pas introduit de barquette d'engrais.
On réalise la culture dans les conditions habituelles et on mesure la hauteur moyenne des tiges d'eucalyptus après 3 mois d'essais. Les résultats obtenus sont les suivants :
Série $E_0$ : 17,2 mm
Série $E_1$ : 40,1 mm
Série $E_2$ : 44,1 mm
Série $E_3$ : 55 mm.
Ces résultats montrent que les membranes sont efficaces et permettent à l'engrais d'être libéré sur des périodes de plusieurs mois.
Par ailleurs, au vu de ces exemples, on voit que la quantité et la durée de désorption de l'engrais dépendent de la nature de la membrane, de l'épaisseur de celle-ci et du rapport entre la surface de la membrane et la quantité d'engrais présente dans le conditionnement, ce qui permet de s'adapter à différents types de culture.

## Exemple 10

Cet exemple concerne la fabrication d'un dispositif de conditionnement en forme de tube scellé aux deux extrémités contenant de l'urée et réalisé en copolymère d'éthylène et acétate de vinyle greffé à 40 % d'acide acrylique.
On immerge 36 kg de poudre de copolymère d'éthylène et d'acétate de vinyle à 18 % d'acétate de vinyle dans une solution d'acide acrylique comprenant :
— acide acrylique 16,05 kg,
— eau permutée 111,7 kg,
— sel de Mohr 0,867 kg.

On réalise un balayage d'azote pour chasser l'air du mélange et on le soumet à une irradiation γ au moyen d'une source de cobalt 60, à un débit de dose de 60 000 rad/h avec une dose d'irradiation de 1,1 Mrad, en opérant à une température comprise entre 45 et 53 °C.

Après filtration, lavage et séchage on obtient une poudre de copolymère d'éthylène et d'acétate de vinyle greffé par l'acide acrylique, dont le taux de greffage est de 40 %. On met cette poudre sous forme d'un tube de parois de 0,15 mm d'épaisseur par extrusion et on forme à partir de ce tube des sachets contenant 2,5 g d'urée et ayant une surface de membrane de 20 cm².

On vérifie les propriétés des sachets ainsi obtenus en réalisant la désorption à 25 °C. Les résultats obtenus sont représentés par la courbe 11 de la figure 5 qui illustre la quantité d'urée libérée par cm² de membrane en fonction du temps (jours).

### Exemple 11

A partir du tube extrudé de l'exemple 10, on réalise des sachets contenant 4,5 g de phosphate monopotassique avec une surface de membrane de 20 cm². On vérifie les propriétés du conditionnement ainsi obtenu en réalisant la désorption à 25 °C. Les résultats sont illustrés par la courbe 12 de la figure 5 qui représente la quantité de phosphate monopotassique libéré par cm² de membrane en fonction du temps.

### Exemple 12

A partir du tube extrudé de l'exemple 10, on réalise des sachets contenant 4,5 g de nitrate de calcium avec une surface de membrane de 20 cm². On vérifie les propriétés du conditionnement ainsi obtenu en réalisant la désorption à 25 °C. Les résultats sont illustrés par la courbe 13 de la figure 5 qui représente la quantité de nitrate de calcium libéré par cm² de membrane en fonction du temps.

### Exemple 13

A partir du copolymère greffé identique à celui de l'exemple 10, on forme par extrusion un tube de parois de 2 mm d'épaisseur et on réalise des sachets contenant 4,5 g de phosphate monopotassique et 2 ml d'ammoniaque à 20-21 % de $NH_3$ avec une surface de membrane de 20 cm². On vérifie les propriétés du conditionnement ainsi obtenu en réalisant la désorption à 25 °C. Les résultats sont illustrés par la courbe 14 de la figure 5 qui représente la quantité de phosphate monopotassique libéré par cm² de membrane en fonction du temps.

### Exemple 14

A partir du tube extrudé de l'exemple 13, on réalise des sachets contenant 4,5 g de nitrate de calcium et 2 ml d'ammoniaque à 20-21 % de $NH_3$ avec une surface de membrane de 20 cm². On vérifie les propriétés du conditionnement ainsi obtenu en réalisant la désorption à 25 °C. Les résultats sont illustrés par la courbe 15 de la figure 5 qui représente la quantité de nitrate de calcium libéré par cm² de membrane en fonction du temps.

Les conditions et les courbes se rapportant aux exemples 10 à 14 dans lesquels le dispositif de conditionnement est une membrane extrudée sous forme de tube, réalisée à partir du copolymère éthylène-acétate de vinyle, à 18 % d'acétate de vinyle, greffé à 40 % d'acide acrylique, sont données dans le tableau qui suit.

### Tableau

| N° exemple | N° courbe | Epaisseur membrane | Engrais |
|---|---|---|---|
| 10 | 11 | 0,15 mm | 2,5 g urée |
| 11 | 12 | 0,15 mm | 4,5 g $KH_2PO_4$ |
| 12 | 13 | 0,15 mm | 4,5 g $Ca(NO_3)_2$ |
| 13 | 14 | 0,2 mm | 4,5 g $KH_2PO_4$ + 2 ml $NH_4OH$ |
| 14 | 15 | 0,2 mm | 4,5 g $Ca(NO_3)_2$ + 2 ml $NH_4OH$ |

**Revendications**

1. Dispositif de conditionnement d'engrais hydrosolubles et/ou d'autres produits hydrosolubles utilisables notamment en agriculture, permettant d'assurer une désorption programmée desdits engrais et/ou desdits produits, caractérisé en ce qu'il comprend un récipient fermé dont au moins l'une des parois est constituée par une membrane en polymère hydrophobe greffé par des monomères hydrophiles, ledit récipient contenant lesdits engrais et/ou lesdits produits.

2. Dispositif selon la revendication 1, caractérisé en ce que le polymère hydrophobe est une polyoléfine ou un copolymère d'oléfine.

3. Dispositif selon la revendication 2, caractérisé en ce que le polymère hydrophobe est le polyéthylène, la polypropylène ou un copolymère d'éthylène et d'acétate de vinyle.

4. Dispositif selon l'une quelconque des revendications 1 à 3, caractérisé en ce que les monomères hydrophiles sont l'acide acrylique ou la vinyl pyrrolidone.

5. Dispositif selon la revendication 1, caractérisé en ce que ladite membrane est en copolymère d'éthylène et d'acétate de vinyle, greffé par de l'acide acrylique.

6. Dispositif selon la revendication 1, caractérisé en ce que la membrane est en polyéthylène greffé par de l'acide acrylique.

7. Dispositif selon l'une quelconque des revendications 1 à 6, caractérisé en ce que le taux de monomères hydrophiles greffés est de 25 à 50 % par rapport au poids de polymère hydrophobe.

8. Dispositif selon l'une quelconque des revendications 1 à 7, caractérisé en ce que l'engrais étant à base de phosphate ou de nitrate, le dispositif contient de plus de l'ammoniaque.

**Claims**

1. Apparatus for conditioning water-soluble fertilizers and/or other water-soluble products used especially in agriculture, permitting graduated desorption of said fertilizer and/or products, characterised in that it comprises a closed vessel at least one of whose walls is constituted by a membrane of a hydrophobic polymer grafted with hydrophilic monomers, said vessel containing said fertilizer and/or said products.

2. Apparatus according to Claim 1, characterised in that the hydophobic polymer is a polyolefin or an olefin copolymer.

3. Apparatus according to Claim 2, characterised in that the hydrophobic polymer is polyethylene, polypropylene or an ethylene-vinyl acetate copolymer.

4. Apparatus according to any one of Claims 1 to 3, characterised in that the hydrophilic monomers are acrylic acid or vinyl pyrrolidone.

5. Apparatus according to Claim 1, characterised in that said membrane is an ethylene/vinyl acetate copolymer grafted with acrylic acid.

6. Apparatus according to Claim 1, characterised in that the membrane is of polyethylene grafted by acrylic acid.

7. Apparatus according to any one of Claims 1 to 6, characterised in that the amount of grafted hydrophilic monomers is from 25 to 50 % by weight, based on hydrophobic polymer.

8. Apparatus according to any one of Claims 1 to 7, characterised in that the fertilizer is based on phosphate or nitrate, the apparatus additionally containing ammonia.

**Patentansprüche**

1. Einrichtung zum Konditionieren von wasserlöslichen Düngemitteln und/oder anderen wasserlöslichen Stoffen, die insbesondere in der Landwirtschaft verwendbar sind, mit der eine regulierbare Desorption der Düngemittel und/oder der Stoffe ermöglichbar ist, dadurch gekennzeichnet, daß sie einen geschlossenen Behälter aufweist, von dem wenigstens eine der Wände von einer Membrane aus einem hydrophoben Polymer mit eingelagerten hydrophilen Monomeren ist, und daß der Behälter die Düngemittel und/oder die Stoffe enthält.

2. Einrichtung nach Anspruch 1, dadurch gekennzeichnet, daß das hydrophobe Polymer ein Polyolefin oder ein Olefincopolymer ist.

3. Einrichtung nach Anspruch 2, dadurch gekennzeichnet, daß das hydrophobe Polymer Polyäthylen, Polypropylen oder ein Copolymer von Äthylen und Vinylacetat ist.

4. Einrichtung nach einem der Ansprüche 1 bis 3, dadurch gekennzeichnet, daß die hydrophilen Monomere Acrylsäure oder Vinylpyrrolidon sind.

5. Einrichtung nach Anspruch 1, dadurch gekennzeichnet, daß die Membrane aus einem Copolymer von Äthylen und Vinylacetat mit Einlagerungen von Acrylsäure besteht.

6. Einrichtung nach Anspruch 1, dadurch gekennzeichnet, daß die Membrane aus Polyäthylen mit Einlagerungen von Acrylsäure besteht.

7. Einrichtung nach einem der Ansprüche 1 bis 6, dadurch gekennzeichnet, daß der Anteil an hydrophilen Monomeren mit Einlagerungen 25 bis 50 % in bezug auf das Gewicht des hydrophoben Polymers ist.

8. Einrichtung nach einem der Ansprüche 1 bis 7, dadurch gekennzeichnet, daß das Düngemittel auf Phosphat- oder Nitratbasis ist und die Einrichtung ferner Ammoniak enthält.

FIG. 1

FIG. 2

FIG. 3

FIG. 4

FIG.5